# EUROPEAN PATENT SPECIFICATION

(11) **EP 2 635 002 B1**
(45) Date of publication and mention of the grant of the patent: **26.04.2017**
(21) Application number: 11777261.6
(22) Date of filing: 30.05.2011
(51) Int. Cl.: H04L 29/12

(54) **CGN (CARRIER GRADE NAT) ENTITY BASED DATA TRANSMISSION METHOD, CGN ENTITY, GATEWAY AND SYSTEM**
AUF CGN (NAT AUF CARRIER-EBENE)-EINHEIT BASIERENDES DATENÜBERTRAGUNGSVERFAHREN, CGN-EINHEIT, GATEWAY UND SYSTEM
PROCÉDÉ DE TRANSMISSION DE DONNÉES BASÉ SUR UNE ENTITÉ CGN (CARRIER GRADE NAT), ENTITÉ CGN, PASSERELLE ET SYSTÈME ASSOCIÉS

(30) Priority: 23.11.2010 CN 201010560243
(43) Date of publication of application: 04.09.2013
(73) Proprietor: Huawei Technologies Co., Ltd., Longgang District Shenzhen, Guangdong 518129 (CN)
(72) Inventor: ZHOU, Junping, Guangdong 518129 (CN); GUO, Dong, Guangdong 518129 (CN)
(74) Representative: Pfenning, Meinig & Partner mbB
(86) International application number: PCT/CN2011/074852
(87) International publication number: WO 2011/137842

(56) References cited:
- CN-A- 1 697 421
- CN-A- 101 360 037
- CN-A- 101 447 935
- US-B1- 7 706 371
- CUI J WU D WU TSINGHUA UNIVERSITY Y: "B4 translated DS-lite enable AFTR to serve more B4s; draft-cui-softwire-b4-translated-ds-lite-0 0.txt", B4 TRANSLATED DS-LITE ENABLE AFTR TO SERVE MORE B4S; DRAFT-CUI-SOFTWIRE-B4-TRANSLATED-DS-LITE-0 0.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 18 October 2010 (2010-10-18), pages 1-11, XP015071783, [retrieved on 2010-10-18]
- BROCKNERS S GUNDAVELLI CISCO S SPEICHER DEUTSCHE TELEKOM AG D WARD JUNIPER NETWORKS F: "Gateway Initiated Dual-Stack Lite Deployment; draft-gundavelli-softwire-gateway-init-ds- lite-03.txt", GATEWAY INITIATED DUAL-STACK LITE DEPLOYMENT; DRAFT-GUNDAVELLI-SOFTWIRE-GATEWAY-INIT-DS- LITE-03.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, no. 3, 8 March 2010 (2010-03-08), pages 1-13, XP015067824, [retrieved on 2010-03-08]

## Description

### FIELD OF THE INVENTION

The present invention relates to the field of communication technologies, and in particular, to a CGN entity (Carrier Grade NAT, carrier grade address translation (Network Address Translation, network address translation)) based data transmission method, a CGN entity, a gateway, and a system.

### BACKGROUND OF THE INVENTION

A Gateway-Initiated DS Lite (Gateway-Initiated Dual-Stack Lite, gateway-initiated dual-stack lite) technology may be considered as a solution to IPv4 address shortage in coexistence of IPv4 (Internet Protocol version 4, Internet Protocol version 4) and IPv6 (Internet Protocol version 6, Internet Protocol version 6).

Further information on the Gateway-Initiated DS Lite technology can be found in CUI J WU D WU TSINGHUA UNIVERSITY Y: "B4 translated DS-lite enable AFTR to serve more B4s; draft-cui-softwire-b4-translated-ds-lite-0 0.txt", IETF; STANDARD WORKING DRAFT, October 18, 2010, pages 1-11, and BROCKNERS S GUNDAVELLI CISCO S SPEICHER DEUTSCHE TELEKOM AG D WARD JUNIPER NETWORKS F: "Gateway Initiated Dual-Stack Lite Deployment; draft-gundavelli-softwire-gateway-init-ds- lite-03.txt", IETF; STANDARD WORKING DRAFT, March 8, 2010, pages 1-13.

The Gateway-Initiated DS Lite is based on the current 3GPP (3rd Generation Partnership Project, 3rd Generation Partnership Project) deployment architecture, and supports a mobile tunnel used between a dual-stack UE (User Equipment, user terminal), an SGW (Serving Gateway, serving gateway), and a PGW (Packet Data Network Gateway, packet data network gateway), and a DS-Lite tunnel used between a PGW and a CGN entity (Carrier Grade NAT, carrier grade address translation (Network Address Translation, network address translation)). The PGW implements mapping and packet transmission from the mobile tunnel to the DS-Lite tunnel, and the CGN entity needs to terminate the DS-Lite tunnel and implement NAT 44, where NAT 44 refers to translating an IPv4 address sharable to all UEs and insignificant for routing into a routable IPv4 address.

When the UEs under the same CGN entity need to interwork with each other (the UEs are called interworking terminals), all packets between the UEs need to pass through the CGN entity, and the CGN entity implements NAT 44 translation for the packets, and therefore, resources of the CGN entity are consumed drastically, which leads to low transmission efficiency of the interworking UEs.

### SUMMARY OF THE INVENTION

Embodiments of the present invention provide a CGN entity based data transmission method, a CGN entity, a gateway, and a system to improve data transmission efficiency. The invention is defined by the subject-matter of the independent claims.

As may be seen from the technical solutions provided in the embodiments of the present invention, a CGN entity notifies information about an interworking terminal to a gateway of a peer terminal, and the traffic of interworking terminals is directly transferred between gateways without being forwarded by the CGN entity, thereby reducing resource consumption of the CGN entity and improving transmission efficiency of interworking terminals.

### BRIEF DESCRIPTION OF THE DRAWINGS

To describe the technical solutions in the embodiments of the present invention more clearly, the following briefly introduces the accompanying drawings required for describing the embodiments. Apparently, the accompanying drawings in the following description show merely some embodiments of the present invention, and persons of ordinary skill in the art may still derive other drawings from the accompanying drawings without creative efforts.
FIG. 1 is a schematic flowchart of a CGN entity based data transmission method according to an embodiment of the present invention;
FIG. 2 is a first schematic diagram of composition of a CGN entity according to an embodiment of the present invention;
FIG. 3 is a second schematic diagram of composition of a CGN entity according to an embodiment of the present invention;
FIG. 4 is a schematic flowchart of a CGN entity based data transmission method according to another embodiment of the present invention;
FIG. 5 is a first schematic diagram of composition of a gateway according to an embodiment of the present invention;
FIG. 6 is a second schematic diagram of composition of a gateway according to an embodiment of the present invention;
FIG. 7 is a schematic diagram of composition of a data transmission system according to an embodiment of the present invention; and
FIG. 8 is a schematic diagram of an application scenario of a CGN entity based data transmission method according to another embodiment of the present invention.

### DETAILED DESCRIPTION OF THE EMBODIMENTS

The following clearly describes the technical solutions in the embodiments of the present invention with reference to the accompanying drawings in the embodiments of the present invention. Apparently, the described embodiments are merely a part rather than all of the embodiments of the present invention. All other embodiments obtained by persons of ordinary skill in the art based on the embodiments of the present invention without creative efforts shall fall within the protection scope of the present invention.

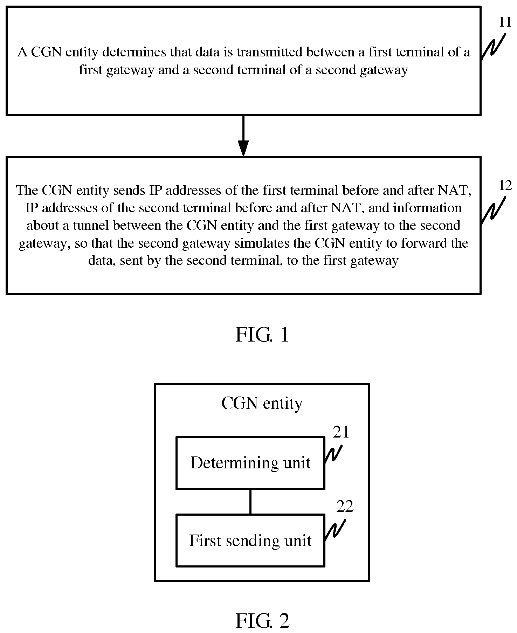

As shown in FIG. 1, an embodiment of the present invention provides a CGN entity based data transmission method, including:
Step 11: A CGN carrier grade address translation entity determines that data is transmitted between a first terminal of a first gateway and a second terminal of a second gateway.
Step 12: The CGN entity sends IP addresses of the first terminal before and after NAT, IP addresses of the second terminal before and after NAT, and information about a tunnel between the CGN entity and the first gateway to the second gateway, so that the second gateway simulates the CGN entity to forward the data, sent by the second terminal, to the first gateway.

The entity for performing the CGN entity based data transmission method in the embodiment of the present invention is a CGN entity. The first gateway and the second gateway may be GGSNs (Gateway GPRS Support Node, gateway GPRS support node) device or PGW devices.

Optionally, the CGN entity based data transmission method in the embodiment of the present invention may further include the following:
The CGN entity sends IP addresses of the first terminal before and after NAT network address translation, IP addresses of the second terminal before and after NAT, and information about a tunnel between the CGN entity and the second gateway to the first gateway, so that the first gateway simulates the CGN entity to forward the data, sent by the first terminal, to the second gateway.

The sequence between this step and step 12 described above is not limited.

Specifically, in step 11, by identifying whether the destination IP address of a packet received from the first gateway is the public IP address of the second terminal in the NAT 44 translation relationship of the CGN entity, the CGN entity may determine whether a data packet is transmitted from the first terminal to the second terminal. Alternatively, by identifying whether the destination IP address of a packet received from the second gateway is the public IP address of the first terminal in the NAT 44 translation relationship of the CGN entity, the CGN entity may determine whether a data packet is transmitted from the second terminal to the first terminal.

When data is transmitted between the first terminal and the second terminal, the first terminal and the second terminal may be called interworking terminals.

The CGN entity stores the private IP address of the first terminal before NAT, the public IP address of the first terminal after NAT, the private IP address of the second terminal before NAT, and the public IP address of the second terminal after NAT.

Specifically, in step 12 above, the tunnel information about the tunnel between the CGN entity and the first gateway may include:
a start IP address of the tunnel, an end IP address of the tunnel, a tunnel type, and a first SID (Softwire-Identifier, softwire identifier).

Similarly, optionally, the tunnel information about the tunnel between the CGN entity and the second gateway may include: a start IP address of the tunnel, an end IP address of the tunnel, a tunnel type, and a second SID.

The SID may be understood according to the following description: A data plane tunnel is defined between the CGN entity and the gateway to transmit interworking data between interworking terminals; the tunnel is associated with a terminal through an SID allocated by the gateway, for example, associated with the context of a terminal, that is, the CGN entity uses the SID to identify the context of the terminal.

The start IP address of the tunnel, the end IP address of the tunnel, and the tunnel type need to be maintained on the gateway and the CGN entity, that is, such information needs to be stored on the gateway or the CGN entity. The first SID and the second SID may be allocated by the gateway.

It can be seen that, in the embodiment of the present invention, the first SID is associated with the first terminal, and the second SID is associated with the second terminal. Further, the private and public IP addresses of the first terminal before and after NAT may be associated according to the first SID, that is, correspondence exists between the first SID and the private and public IP addresses of the first terminal before and after NAT; similarly, the private and public IP addresses of the second terminal before and after NAT may be associated according to the second SID, that is, correspondence exists between the second SID and the private and public IP addresses of the second terminal before and after NAT.

Meanwhile, the CGN entity may store the first SID and the second SID.

The CGN entity based data transmission method in the embodiment of the present invention may further include the following:
a signaling channel is established between the CGN entity and the first gateway according to a third SID to transmit the IP addresses of the first terminal before and after NAT network address translation, the IP addresses of the second terminal before and after NAT, and the information about the tunnel between the CGN entity and the second gateway; and
a signaling channel is established between the CGN entity and the second gateway according to a fourth SID to transmit the IP addresses of the first terminal before and after NAT network address translation, the IP addresses of the second terminal before and after NAT, and the information about the tunnel between the CGN entity and the first gateway.

The third SID and the fourth SID are different from the first SID or the second SID; the third SID and the fourth SID are associated with no terminal, and a tunnel identified by the third SID or the fourth SID serves as a dedicated signaling plane tunnel to transmit extended signaling between the CGN entity and the gateway and implement transfer of the information involved in step 12 and step 13. For example, a tunnel with an SID of 0xFFFFFFFF is selected and exclusively used to transmit the extended signaling between the CGN entity and the gateway.

The tunnel that is between the CGN entity and the first gateway and is identified by the third SID may be an existing tunnel between the CGN entity and the first gateway, or a newly established tunnel, which is not limited herein. Similarly, the tunnel that is between the CGN entity and the second gateway and is identified by the fourth SID may be an existing tunnel between the CGN entity and the second gateway, or a newly established tunnel, which is not limited herein.

It can be seen that, in the embodiment of the present invention, information about a peer terminal that interworks with a local terminal is maintained in each of the first gateway and the second gateway. When the first gateway receives an uplink packet from the first terminal (the source IP address of the packet is the private IP address of the first terminal, and the destination IP address of the packet is the public IP address of the second terminal), the first gateway may replace the source IP address of the packet with the public IP address of the first terminal, and replace the destination IP address of the packet with the private IP address of the second terminal. Then, according to the tunnel information notified by the CGN entity, the first gateway encapsulates the packet into the tunnel and sends it to the second gateway of the second terminal. Moreover, a source IP address of an outer-layer IP header of the tunnel is the IP address of the CGN entity, and the SID of the tunnel is a second SID associated with the second terminal. Therefore, when the first gateway simulates the CGN entity, the second terminal cannot sense the first gateway, and considers that the data is sent by the CGN entity.

Similarly, when the second terminal sends an uplink packet to the second gateway (the source IP address of the packet is the private IP address of the second terminal, and the destination IP address of the packet is the public IP address of the first terminal), reference can be made to the foregoing process for the processing process of the second gateway.

As can be seen from the technical solutions provided in the embodiment of the present invention, a CGN entity notifies information about an interworking terminal to a gateway of a peer terminal, and the traffic of interworking terminals is directly transferred between gateways without being forwarded by the CGN entity, thereby reducing resource consumption of the CGN entity and improving transmission efficiency of interworking terminals.

The CGN entity based data transmission method in the embodiment of the present invention may further include the following:
When the first terminal goes offline, the CGN entity deletes the first SID, and instructs the second gateway to delete the IP addresses of the first terminal before and after NAT and the first SID associated with the first terminal.

Similarly, optionally, when the second terminal goes offline, the CGN entity deletes the second SID, and instructs the first gateway to delete the IP addresses of the second terminal before and after NAT and the second SID associated with the second terminal.

Specifically, when the terminal goes offline, the gateway of the terminal first senses it, and the gateway may notify, through a signaling channel between the gateway and the CGN entity, the CGN entity that the terminal is offline. When determining that the terminal is offline, the gateway deletes context information of the terminal. If the CGN entity needs to withdraw the correspondence between the SID corresponding to the terminal and the public network address after NAT, the gateway needs to instruct, through extended signaling, the CGN entity to withdraw the correspondence, and the CGN entity may instruct, through extended signaling, the gateway of a peer terminal interworking with the terminal to delete the context information of the terminal. If the CGN entity does not need to delete the correspondence between the SID and the public network address, the gateway needs to instruct, through extended signaling, the gateway of a peer terminal interworking with the terminal to delete the context information of the terminal.

Optionally, the CGN entity based data transmission method in the embodiment of the present invention may further include the following:
The CGN entity sends the IP addresses and port numbers of the first terminal before and after NAT to the second gateway.

The CGN entity sends the IP addresses and port numbers of the second terminal before and after NAT to the first gateway.

At this time, the CGN entity stores the IP addresses and port numbers before and after NAT. When the terminal goes offline, it correspondingly needs to delete the IP addresses and port numbers before and after NAT, which is not further detailed herein.

It can be seen that, the private IP address of the terminal and a port number may be replaced with a public IP address and a port number after NAT. In this way, different private IP addresses can be translated into the same public IP address, and the quantity of public IP addresses required is reduced.

The CGN entity based data transmission method in the embodiment of the present invention can support forwarding of terminal interworking data within an eNodeB or between eNodeBs and save network resources of a core network when the method is applicable to a scenario where a part of functions of a gateway are moved down to a base station such as an eNodeB (evolved NodeB).

The CGN entity based data transmission method in the embodiment of the present invention is applicable to terminal interworking processing within the same gateway device.

As shown in FIG. 2, corresponding to the CGN entity based data transmission method in the foregoing embodiment, a CGN entity is provided in an embodiment of the present invention, including:
a determining unit 21, configured to determine that data is transmitted between a first terminal of a first gateway and a second terminal of a second gateway; and
a first sending unit 22, configured to send IP addresses of the first terminal before and after NAT, IP addresses of the second terminal before and after NAT, and information about a tunnel between the CGN entity and the first gateway to the second gateway, so that the second gateway simulates the CGN entity to forward the data, sent by the second terminal, to the first gateway.

In the CGN entity in the embodiment of the present invention, the first gateway and second gateway involved may be GGSN devices or PGW devices.

In the embodiment of the present invention, the information about the tunnel between the CGN entity and the first gateway may include: a start IP address of the tunnel, an end IP address of the tunnel, a first SID, and a tunnel type, where the first SID is associated with the first terminal.

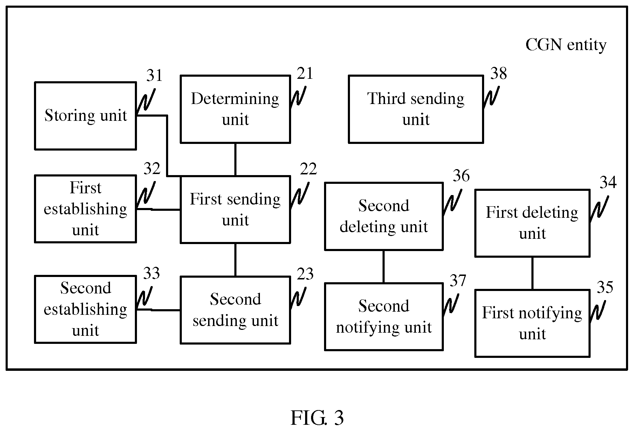

As shown in FIG. 3, optionally, the CGN entity in the embodiment of the present invention may further include:
a second sending unit 23, configured to send IP addresses of the first terminal before and after NAT network address translation, IP addresses of the second terminal before and after NAT, and information about a tunnel between the CGN entity and the second gateway to the first gateway, so that the first gateway simulates the CGN entity to forward the data, sent by the first terminal, to the second gateway.

The information about the tunnel between the CGN entity and the second gateway may include: a start IP address of the tunnel, an end IP address of the tunnel, a second SID, and a tunnel type, where the second SID is associated with the second terminal.

Still as shown in FIG. 3, the CGN entity in the embodiment of the present invention may further include:
a storing unit 31, configured to store the IP addresses of the first terminal before and after NAT, the IP addresses of the second terminal before and after NAT, and the first SID, and optionally, further configured to store the second SID;
a first establishing unit 32, configured to establish a signaling channel to the first gateway according to a third SID to transmit the IP addresses of the first terminal before and after NAT network address translation, the IP addresses of the second terminal before and after NAT, and the information about the tunnel between the CGN entity and the second gateway; and
a second establishing unit 33, configured to establish a signaling channel to the second gateway according to a fourth SID to transmit the IP addresses of the first terminal before and after NAT network address translation, the IP addresses of the second terminal before and after NAT, and the information about the tunnel between the CGN entity and the first gateway.

The third SID and the fourth SID are different from the first SID or the second SID; the third SID and the fourth SID are associated with no terminal, and a tunnel identified by the third SID or the fourth SID serves as a dedicated signaling plane tunnel to transmit extended signaling between the CGN entity and the gateway.

Still as shown in FIG. 3, the CGN entity in the embodiment of the present invention may further include:
a first deleting unit 34, configured to delete the first SID when the first terminal goes offline; and
a first notifying unit 35, configured to instruct the second gateway to delete the IP addresses of the first terminal before and after NAT and the first SID.

Optionally, still as shown in FIG. 3, the CGN entity in the embodiment of the present invention may further include:
a second deleting unit 36, configured to delete the second SID when the second terminal goes offline; and
a second notifying unit 37, configured to instruct the first gateway to delete the IP addresses of the second terminal before and after NAT and the second SID.

Specifically, when the terminal goes offline, the gateway of the terminal first senses it, and deletes context information of the terminal. If the CGN entity needs to withdraw the correspondence between the SID corresponding to the terminal and the public network address after NAT, the gateway needs to instruct, through extended signaling, the CGN entity to withdraw the correspondence, and the CGN entity may instruct, through extended signaling, the gateway of a peer terminal interworking with the terminal to delete the context information of the terminal. If the CGN entity does not need to delete the correspondence between the SID and the public network address, the gateway needs to instruct, through extended signaling, the gateway of a peer terminal interworking with the terminal to delete the context information of the terminal.

Through the first sending unit 22 and the second sending unit 23, information about a peer terminal that interworks with a local terminal UE is maintained in each of the first gateway and the second gateway.

Still as shown in FIG. 3, the CGN entity in the embodiment of the present invention may further include:
a third sending unit 38, configured to send the IP addresses and port numbers of the first terminal before and after NAT to the second gateway, and send the IP addresses and port numbers of the second terminal before and after NAT to the first gateway.

In this case, the storing unit 31 stores the IP addresses and port numbers before and after NAT. When the terminal goes offline, it correspondingly needs to delete the IP addresses and port numbers before and after NAT, which is not further detailed herein.

It can be seen that, the private IP address of the terminal and a port number may be replaced with a public IP address and port number after NAT. In this way, the quantity of public IP addresses required is reduced.

As can be seen from the technical solutions provided in the embodiment of the present invention, a CGN entity notifies information about an interworking terminal to a gateway of a peer terminal, and the traffic of interworking terminals is directly transferred between gateways without being forwarded by the CGN entity, thereby reducing resource consumption of the CGN entity and improving transmission efficiency of interworking terminals.

The CGN entity in the embodiment of the present invention can support forwarding of terminal interworking data streams within an eNodeB or between eNodeBs and save network resources of a core network when the entity is applicable to a scenario where a part of functions of a gateway are moved down to a base station such as an eNodeB.

The CGN entity in the embodiment of the present invention is applicable to terminal interworking processing within the same gateway device.

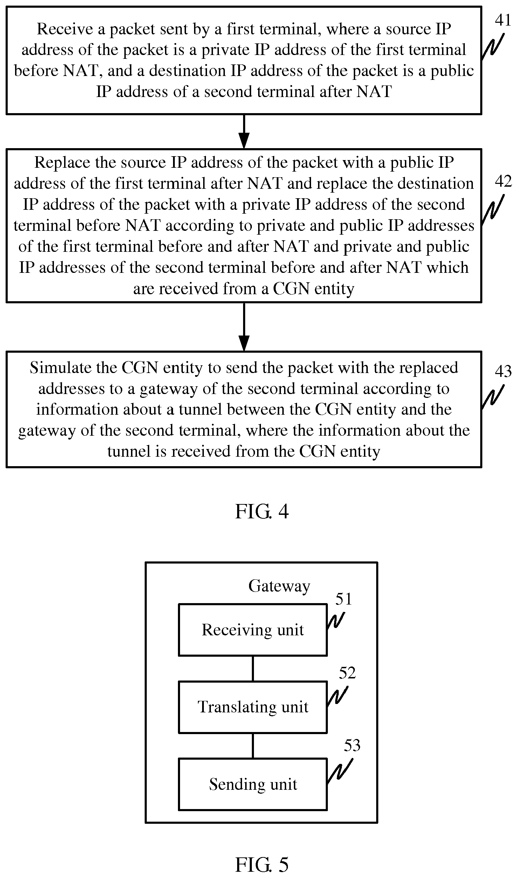

As shown in FIG. 4, an embodiment of the present invention provides a CGN entity based data transmission method, including:
Step 41: Receive a packet sent by a first terminal, where a source IP address of the packet is a private IP address of the first terminal before NAT, and a destination IP address of the packet is a public IP address of a second terminal after NAT.
Step 42: According to private and public IP addresses of the first terminal before and after NAT and private and public IP addresses of the second terminal before and after NAT which are received from a CGN entity, replace the source IP address of the packet with a public IP address of the first terminal after NAT and replace the destination IP address of the packet with a private IP address of the second terminal before NAT.
Step 43: Simulate the CGN entity to send the packet with the replaced addresses to a gateway of the second terminal according to information about a tunnel between the CGN entity and the gateway of the second terminal, where the information about the tunnel is received from the CGN entity.

The entity for implementing the CGN entity based data transmission method in the embodiment of the present invention is a gateway, and the gateway may be a GGSN device or a PGW device. The gateway based on the embodiment of the present invention is a gateway of the first terminal, and is hereinafter referred to as a first gateway.

Before step 41, the CGN entity based data transmission method in the embodiment of the present invention may further include the following:
The first gateway receives, from the CGN entity, the IP addresses of the first terminal before and after NAT network address translation, the IP addresses of the second terminal before and after NAT, and the information about the tunnel between the CGN entity and the second gateway.

If the CGN entity sends the IP addresses and port numbers of the first terminal before and after NAT to the second gateway and sends the IP addresses and port numbers of the second terminal before and after NAT to the first gateway, the first gateway needs to receive information about the port number, which is not further detailed herein.

In step 43, the information about the tunnel may include: a start IP address of the tunnel, an end IP address of the tunnel, a tunnel type, and a second SID, where the second SID is associated with the second terminal.

It should be noted that a data plane tunnel is defined between the CGN entity and the gateway to transmit interworking data between interworking terminals; the tunnel is associated with a terminal through an SID, for example, associated with the context of a terminal, that is, the CGN entity uses the SID to identify the context of the terminal. In the embodiment of the present invention, the first SID is associated with the first terminal, and the second SID is associated with the second terminal.

Specifically, in step 41, when the first gateway receives an uplink packet from the first terminal, a source IP address of the packet is a private IP address of the first terminal, and a destination IP address of the packet is a public IP address of the second terminal. The first terminal and the second terminal may be registered with a Service Server (service server) beforehand, and the Service Server learns the public IP addresses of the first terminal and the second terminal. When the first terminal accesses the second terminal, the Service Server may notify the first terminal to which public IP address a packet is sent, so that the first terminal can access the second terminal, which is not further detailed herein.

In step 42, the first gateway may replace the source IP address of the packet with the public IP address of the first terminal, and replace the destination IP address of the packet with the private IP address of the second terminal.

In step 43, according to the tunnel information notified by the CGN entity, the first gateway simulates the CGN entity to encapsulate the packet into the tunnel and send it to the second gateway of the second terminal. Moreover, the source IP address of the outer-layer IP header of the tunnel is the IP address of the CGN entity, and the SID of the tunnel is the second SID associated with the second terminal. Therefore, the second terminal cannot sense the first gateway when the first gateway simulates the CGN entity.

As can be seen from the technical solutions provided in the embodiment of the present invention, a CGN entity notifies information about an interworking terminal to a gateway of a peer terminal, and the traffic of interworking terminals is directly transferred between gateways without being forwarded by the CGN entity, thereby reducing resource consumption of the CGN entity and improving transmission efficiency of interworking terminals.

The CGN entity based data transmission method in the embodiment of the present invention may further include the following:
The first gateway establishes a signaling channel to the CGN entity according to a third SID.

The third SID is different from the first SID or the second SID; the third SID is associated with no terminal, and a tunnel identified by the third SID serves as a dedicated signaling plane tunnel to transmit extended signaling between the first gateway and the CGN entity.

The signaling channel between the first gateway and the CGN entity may be an existing tunnel between the first gateway and the CGN entity, or a newly established tunnel, which is not limited herein.

The CGN entity based data transmission method in the embodiment of the present invention may further include the following:
The first gateway deletes the private and public IP addresses of the first terminal before and after NAT when the first terminal goes offline.

The first gateway instructs the gateway of the second terminal to delete the private and public IP addresses of the first terminal before and after NAT.

Specifically, when the terminal goes offline, the gateway of the terminal first senses it, and deletes context information of the terminal. If the CGN entity needs to withdraw the correspondence between the SID corresponding to the terminal and the public network address after NAT, the gateway needs to instruct, through extended signaling, the CGN entity to withdraw the correspondence, and the CGN entity may use instruct, through extended signaling, the gateway of a peer terminal interworking with the terminal to delete the context information of the terminal. If the CGN entity does not need to delete the correspondence between the SID and the public network address, the gateway needs to instruct, through extended signaling, the gateway of a peer terminal interworking with the terminal to delete the context information of the terminal.

Similarly, when the second terminal sends an uplink packet to the second gateway (the source IP address of the packet is the private IP address of the second terminal, and the destination IP address of the packet is the public IP address of the first terminal), reference can be made to the foregoing process for the processing process of the second gateway.

The CGN entity based data transmission method in the embodiment of the present invention can support forwarding of UE interworking data streams within an eNodeB or between eNodeBs and save network resources of a core network when the method is applicable to a scenario where a part of functions of a gateway are moved down to a base station such as an eNodeB.

The CGN entity based data transmission method in the embodiment of the present invention is applicable to UE interworking processing within the same gateway device.

As shown in FIG. 5, corresponding to the CGN entity based data transmission method in the embodiment shown in FIG. 4, a gateway is provided in an embodiment of the present invention, including:
a receiving unit 51, configured to receive a packet sent by a first terminal, where a source IP address of the packet is a private IP address of the first terminal before NAT, and a destination IP address of the packet is a public IP address of a second terminal after NAT;
a translating unit 52, configured to, according to private and public IP addresses of the first terminal before and after NAT and private and public IP addresses of the second terminal before and after NAT which are received from a CGN entity, replace the source IP address of the packet with a public IP address of the first terminal after NAT and replace the destination IP address of the packet with a private IP address of the second terminal before NAT; and
a sending unit 53, configured to simulate the CGN entity to send the packet with the replaced addresses to a gateway of the second terminal according to information about a tunnel between the CGN entity and the gateway of the second terminal, where the information about the tunnel is received from the CGN entity.

The gateway in the embodiment of the present invention may be a GGSN device or a PGW device, and the gateway based on the embodiment of the present invention is a gateway of the first terminal, and is hereinafter referred to as the first gateway.

Specifically, when the receiving unit 51 of the first gateway receives an uplink packet from the first terminal, a source IP address of the packet is a private IP address of the first terminal, and a destination IP address of the packet is a public IP address of the second terminal.

If the CGN entity sends the IP addresses and port numbers of the first terminal before and after NAT to the second gateway and sends the IP addresses and port numbers of the second terminal before and after NAT to the first gateway, the receiving unit 51 of the first gateway further needs to receive information about the port number.

The translating unit 52 of the first gateway replaces the source IP address of the packet with the public IP address of the first terminal, and replaces the destination IP address of the packet with the private IP address of the second terminal.

It should be noted that a data plane tunnel is defined between the CGN entity and the gateway to transmit interworking data between interworking terminals; the tunnel is associated with a terminal through an SID, for example, associated with the context of a terminal, that is, the CGN entity uses the SID to identify the context of the terminal. For example, the first SID is associated with the first terminal, and the second SID is associated with the second terminal.

The sending unit 53 of the first gateway performs the sending according to the tunnel information notified by the CGN entity, where the tunnel information may include: a start IP address of the tunnel, an end IP address of the tunnel, a tunnel type, and a second SID, where the second SID is associated with the second terminal. The sending unit 53 simulates the CGN entity to encapsulate the packet into the tunnel and send it to the second gateway of the second terminal. Moreover, the source IP address of the outer-layer IP header of the tunnel is the IP address of the CGN entity, and the SID of the tunnel is the second SID associated with the second terminal. Therefore, the second terminal does not sense the first gateway when the first gateway simulates the CGN entity.

As can be seen from the technical solutions provided in the embodiment of the present invention, a CGN entity notifies information about an interworking terminal to a gateway of a peer terminal, and the traffic of interworking terminals is directly transferred between gateways without being forwarded by the CGN entity, thereby reducing resource consumption of the CGN entity and improving transmission efficiency of interworking terminals.

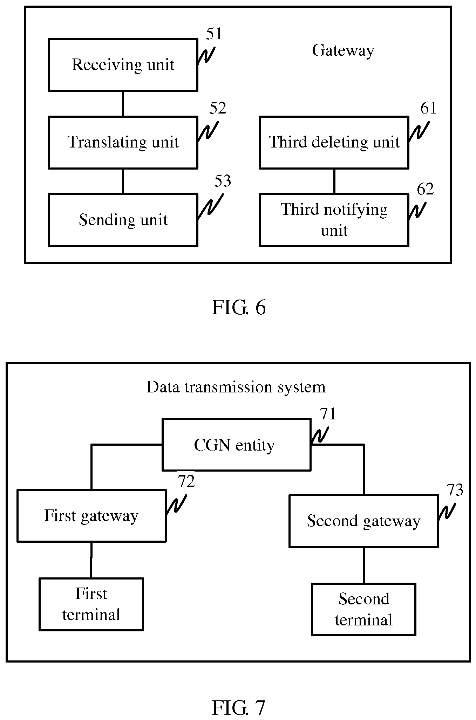

As shown in FIG. 6, the gateway in the embodiment of the present invention may further include:
a third deleting unit 61, configured to delete the private and public IP addresses of the first terminal before and after NAT when the first terminal goes offline; and
a third notifying unit 62, configured to instruct the gateway of the second terminal to delete the private and public IP addresses of the first terminal before and after NAT.

Specifically, when the terminal goes offline, the gateway of the terminal first senses it, and deletes context information of the terminal. If the CGN entity needs to withdraw the correspondence between the SID corresponding to the terminal and the public network address after NAT, the gateway needs to instruct, through extended signaling, the CGN entity to withdraw the correspondence, and the CGN entity may instruct, through extended signaling, the gateway of a peer terminal interworking with the terminal to delete the context information of the terminal. If the CGN entity does not need to delete the correspondence between the SID and the public network address, the gateway needs to instruct, through extended signaling, the gateway of a peer terminal interworking with the terminal to delete the context information of the terminal.

The gateway in the embodiment of the present invention may further include:
a third establishing unit, configured to establish a signaling channel to the CGN entity according to a third SID.

The third SID is different from the first SID or the second SID; the third SID is associated with no terminal, and a tunnel identified by the third SID serves as a dedicated signaling plane tunnel to transmit extended signaling between the first gateway and the CGN entity.

The gateway in the embodiment of the present invention can support forwarding of UE interworking data streams within an eNodeB or between eNodeBs and save network resources of a core network when the gateway is applicable to a scenario where a part of functions of a gateway are moved down to a base station such as an eNodeB.

The gateway in the embodiment of the present invention is applicable to UE interworking processing within the same gateway device.

As shown in FIG. 7, an embodiment of the present invention provides a data transmission system, including:
a CGN entity 71, configured to: when determining that data is transmitted between a first terminal of a first gateway 72 and a second terminal of a second gateway 73, send IP addresses of the first terminal before and after NAT, IP addresses of the second terminal before and after NAT, and information about a tunnel between the CGN entity and the second gateway 73 to the first gateway 72; and
the first gateway 72, configured to: receive a packet sent by the first terminal, where a source IP address of the packet is an IP address of the first terminal before NAT, and a destination IP address of the packet is an IP address of the second terminal after NAT; replace the source IP address of the packet with an IP address of the first terminal after NAT and replace the destination IP address of the packet with an IP address of the second terminal before NAT; and simulate the CGN entity to send the packet with the replaced addresses to the second gateway 73 according to the information about the tunnel between the CGN entity and the second gateway 73.

In the data transmission system in the embodiment of the present invention, the CGN entity 71 is further configured to send IP addresses of the first terminal before and after NAT, IP addresses of the second terminal before and after NAT, and information about a tunnel between the CGN entity and the first gateway 72 to the second gateway 73.

The second gateway 73 is configured to: receive a packet sent by the second terminal, where a source IP address of the packet is an IP address of the second terminal before NAT, and a destination IP address of the packet is an IP address of the first terminal after NAT; replace the source IP address of the packet with an IP address of the second terminal after NAT and replace the destination IP address of the packet with an IP address of the first terminal before NAT; and simulate the CGN entity to send the packet with the replaced addresses to the first gateway 72 according to the information about the tunnel between the CGN entity and the first gateway 72.

In the data transmission system in the embodiment of the present invention, the CGN entity, the first gateway, and the second gateway may be understood by referring to the foregoing embodiments, and details are not repeated herein.

As can be seen from the technical solutions provided in the embodiment of the present invention, a CGN entity notifies information about an interworking terminal to a gateway of a peer terminal, and the traffic of interworking terminals is directly transferred between gateways without being forwarded by the CGN entity, thereby reducing resource consumption of the CGN entity and improving transmission efficiency of interworking terminals.

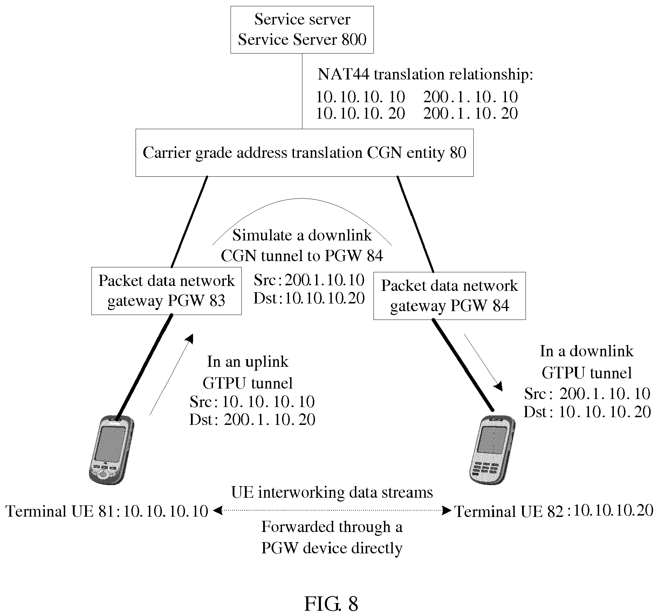

As shown in FIG. 8, when a UE uses an overlapping IPv4 address (the overlapping IPv4 address may be understood as an IPv4 address sharable to all UEs and insignificant for routing), the CGN entity based data transmission method in the embodiment of the present invention optimizes that IPv4s access each other between UEs under the same CGN entity, where a private network address 10.10.10.10 and a public network address 200.1.10.10 are allocated to a UE 81, and a private network address 10.10.10.20 and a public network address 200.1.10.20 are allocated to a UE 82.

When the UE 81 accesses the UE 82, a Service Server (service server) 800 may notify the UE 81 that the UE 81 can access the UE 82 after the UE 81 sends a packet to the public network address 200.1.10.20. Therefore, the source address of the uplink packet received by a PGW 83 from the UE 81 is 10.10.10.10, and the destination address is 200.1.10.20. For example, the source address of a packet in a GTPU (GPRS Tunneling Protocol for User Plane, GPRS tunneling protocol for user plane) tunnel between the PGW 83 and the UE 81 is 10.10.10.10, and the destination address is 200.1.10.20. The PGW 83 sends the uplink packet to the CGN entity 80 through the tunnel between the PGW 83 and the CGN entity 80.

The CGN entity 80 may determine whether the uplink packet is a UE interworking packet by identifying whether the destination IP address of the uplink packet received from the PGW 83 is a public network address of the CGN entity after NAT 44.

After determining that the uplink packet is a UE interworking packet, the CGN entity 80 not only processes the uplink packet normally, but also uses extended signaling between the CGN entity 80 and the PGW 83 to notify the IP addresses of the UE 81 before and after NAT on the CGN entity 80 and the IP addresses of the UE 82 before and after NAT on the CGN entity 80 to the PGW 83, and uses extended signaling between the CGN entity 80 and a PGW 84 to notify the IP addresses of the UE 81 before and after NAT on the CGN entity 80 and the IP addresses of the UE 82 before and after NAT on the CGN entity 80 to the PGW 84. The CGN entity 80 notifies information about a tunnel between the CGN entity 80 and the PGW 83 (a start IP address of the tunnel, an end IP address of the tunnel, a corresponding SID of the UE 81 on the PGW 83, and a tunnel type) to the peer PGW 84, and notifies information about a tunnel between the CGN entity 80 and the PGW 84 (a start IP address of the tunnel, an end IP address of the tunnel, a corresponding SID of the UE 82 on the PGW 84, and a tunnel type) to the peer PGW 83. The extended signaling between the CGN entity 80 and PGW 83 or PGW 84 is transmitted by using an existing channel between the CGN entity 80 and the PGW 83 or PGW 84, and the channel is identified by a special SID that is not associated with a UE.

After the foregoing information exchange, information about a peer UE that interworks with a local UE is maintained on both PGWs. When receiving another uplink packet (its source address is 10.10.10.10, and its destination address is 200.1.10.20) from the UE 81, the PGW 3 matches the destination IP address first to check whether it is the known interworking peer UE 82; if the matching fails, it sends the packet to the CGN entity 80 for processing according to the procedure of the prior art; if the matching succeeds, it replaces the source IP of the packet with the IP (200.1.10.10) of the UE 81 after NAT, replaces the destination IP address of the packet with the IP (10.10.10.20) of the peer UE 82 before NAT directly, recalculates a checksum of an IP header, and then simulates the CGN entity 80 to encapsulate the packet into a tunnel and send it to the peer PGW 84 according to the tunnel information notified by the CGN entity 80, where the corresponding SID of the UE 81 on the PGW 83 is used, and the source IP address of the outer-layer IP header of the tunnel is the IP address of the CGN entity 80.

The process of processing a response packet of the peer UE 82 on the PGW 84 can be understood by referring to the foregoing process.

When the UE 81 goes offline, the PGW 83 of the UE 81 first senses the offline state, and the PGW 83 deletes context information of the UE 81. If the CGN entity 80 needs to delete the correspondence between the corresponding SID of the UE 81 on the PGW 83 and the public network address, the PGW 83 needs to instruct, through extended signaling, the CGN entity 80 to delete the correspondence, and the CGN entity 80 further needs to instruct, through extended signaling, the PGW 84 of a peer terminal interworking with the UE 81 to delete the interworking information of the UE 81. If the CGN entity 80 does not need to delete the correspondence between the SID and the public network address, the PGW 83 needs to instruct, through extended signaling, the PGW 84 of a peer terminal interworking with the UE 81 to delete the corresponding interworking information of the UE 81.

Optionally, in the CGN entity based data transmission method in the embodiment of the present invention, through the NAT 44 of the CGN entity 80, the private network address of the UE 81 may be replaced with a public network address plus a port number.

In this way, after determining that the packet is a UE interworking packet, the CGN entity 80 not only processes the packet normally, but also uses extended signaling between the CGN entity 80 and the PGW 83 to notify the IP addresses before and after NAT and port number of the UE 81 on the CGN entity 80 and the IP addresses of the UE 82 before and after NAT on the CGN entity 80 to the PGW 83, and uses extended signaling between the CGN entity 80 and the PGW 84 to notify the IP addresses before and after NAT and port number of the UE 81 on the CGN entity 80 and the IP addresses of the UE 82 before and after NAT on the CGN entity 80 to the PGW 84. The CGN entity 80 notifies information about a tunnel between the CGN entity 80 and the PGW 83 (a start IP address of the tunnel, an end IP address of the tunnel, a corresponding SID of the UE 81 on the PGW 83, and a tunnel type) to the peer PGW 84, and notifies information about a tunnel between the CGN entity 80 and the PGW 84 (a start IP address of the tunnel, an end IP address of the tunnel, a corresponding SID of the UE 82 on the PGW 84, and a tunnel type) to the peer PGW 83. The extended signaling between the CGN entity 80 and PGW 83 or PGW 84 is transmitted by using an existing channel between the CGN entity 80 and the PGW 83 or PGW 84, and the channel is identified by a special SID that is not associated with a UE.

After the foregoing message exchange, information about a peer UE that interworks with a local UE is maintained on both PGWs. When receiving another uplink packet from the UE 81, the PGW 83 matches the destination IP address and the port number first to check whether it is the known interworking peer UE 82; if the matching fails, it sends the packet to the CGN entity 80 for processing according to the procedure of the prior art; if the matching succeeds, it replaces the source IP of the packet and a port number with the IP and port number of the UE 81 after NAT, replaces the destination IP address and the port number with the IP and port number of the peer UE 82 before NAT directly, recalculates a checksum of an IP header and a checksum of a transport-layer header, and then simulates the CGN entity 80 to encapsulate the packet into a tunnel and send it to the peer PGW 84 according to the tunnel information notified by the CGN entity 80, where the source IP address of the outer-layer IP header of the tunnel is the IP address of the CGN entity 80.

The process of processing a response packet of the peer UE 82 on the PGW 84 can be understood by referring to the foregoing process.

As can be seen from the technical solutions provided in the embodiment of the present invention, a CGN entity notifies information about an interworking UE to a gateway of a peer UE, and the traffic of interworking UEs is directly transferred between gateways without being forwarded by the CGN entity, thereby reducing resource consumption of the CGN entity and improving transmission efficiency of interworking UEs.

It should be noted that, for brevity, the foregoing method embodiments are represented as a series of actions. But persons skilled in the art should be aware that the present invention is not limited to the sequence of the described actions, because according to the present invention, some steps may adopt other sequences or occur simultaneously. It should be further understood by persons skilled in the art that the described embodiments all belong to exemplary embodiments, and the involved actions and modules are not necessarily required by the present invention.

In the foregoing embodiments, the description of each of the embodiments has respective focuses. For a part that is not described in detail in an embodiment, reference may be made to related descriptions in other embodiments.

Persons of ordinary skill in the art may understand that all or a part of the processes of the methods in the embodiments may be implemented by a computer program instructing relevant hardware. The program may be stored in a computer readable storage medium. When the program is run, the processes of the methods in the embodiments are performed. The storage medium may be a magnetic disk, an optical disk, a read-only memory (Read-Only Memory, ROM), or a random access memory (Random Access Memory, RAM).

The foregoing description is merely about exemplary specific embodiments of the present invention, but is not intended to limit the protection scope of the present invention. Any variation or replacement figured out by persons skilled in the art within the technical scope disclosed in the present invention shall fall within the protection scope of the present invention. Therefore, the protection scope of the present invention shall be subject to the protection scope of the claims.

## Claims

1. A carrier grade network address translation, CGN, entity based data transmission method, comprising:
determining (11), by a CGN carrier grade address translation entity, that data is transmitted between a first terminal of a first gateway and a second terminal of a second gateway; and
sending (12), by the CGN entity, a private IP address of the first terminal before network address translation, NAT, and a public IP address of the first terminal after NAT, a private IP address of the second terminal before NAT and a public IP address of the second terminal after NAT, and information about a tunnel between the CGN entity and the first gateway to the second gateway, the information about the tunnel between the CGN entity and the first gateway including a first softwire identifier SID, so that the second gateway simulates the CGN entity to forward data, sent by the second terminal, to the first gateway by receiving a packet from the second terminal, replacing the private IP address of the second terminal before NAT by the public IP address of the second terminal after NAT and replacing the public IP address of the first terminal after NAT with the private IP address of the first terminal before NAT and encapsulating the packet into the tunnel between the CGN entity and the first gateway, wherein a source IP address of an outer-layer IP header of the tunnel is an IP address of the CGN entity, and the first softwire-identifier SID of the tunnel is an SID associated with the first terminal.

2. The CGN entity based data transmission method according to claim 1, further comprising:
sending, by the CGN entity, the private IP address of the first terminal before NAT and public IP address of the first terminal after NAT, the private IP address of the second terminal before NAT and public IP address of the second terminal after NAT, and information about a tunnel between the CGN entity and the second gateway to the first gateway, the information about a tunnel between the CGN entity and the second gateway including a second softwire identifier SID, so that the first gateway simulates the CGN entity to forward data, sent by the first terminal, to the second gateway by receiving a packet from the first terminal, replacing the private IP address of the first terminal before NAT by the public IP address of the first terminal after NAT and replacing the public IP address of the second terminal after NAT with the private IP address of the second terminal before NAT and encapsulating the packet into the tunnel between the CGN entity and the second gateway, wherein a source IP address of an outer-layer IP header of the tunnel is an IP address, of the CGN entity, and the second softwire-identifier SID of the tunnel is an SID associated with the second terminal.

3. The CGN entity based data transmission method according to claim 1, further comprising:
establishing a signaling channel between the CGN entity and the second gateway according to a fourth SID and transmitting the private IP address of the first terminal before NAT and public IP address of the first terminal after NAT, the private IP address of the second terminal before NAT and public IP address of the second terminal after NAT, and the information about the tunnel between the CGN entity and the first gateway.

4. A CGN entity, comprising:
a determining unit (21), configured to determine that data is transmitted between a first terminal of a first gateway and a second terminal of a second gateway; and
a first sending unit (22), configured to send a private IP address of the first terminal before NAT and a public IP address of the first terminal after NAT, a private IP address of the second terminal before NAT and a public IP address of the second terminal after NAT, and information about a tunnel between the CGN entity and the first gateway to the second gateway, the information about the tunnel between the CGN entity and the first gateway including a first softwire identifier SID, so that the second gateway can simulate the CGN entity to forward data, sent by the second terminal, to the first gateway by receiving a packet from the second terminal, replacing the private IP address of the second terminal before NAT by the public IP address of the second terminal after NAT and replacing the public IP address of the first terminal after NAT with the private IP address of the first terminal before NAT and encapsulating the packet into the tunnel between the CGN entity and the first gateway, wherein a source IP address of an outer-layer IP header of the tunnel is an IP address of the CGN entity, and the first softwire-identifier SID of the tunnel is an SID associated with the first terminal.

5. The CGN entity according to claim 4, further comprising:
a second sending unit (23), configured to send the private IP address of the first terminal before NAT and public IP address of the first terminal after NAT, the private IP address of the second terminal before NAT and public IP address of the second terminal after NAT, and information about a tunnel between the CGN entity and the second gateway to the first gateway, the information about a tunnel between the CGN entity and the second gateway including a second softwire identifier SID, so that the first gateway can simulate the CGN entity to forward data, sent by the first terminal, to the second gateway by receiving a packet from the first terminal, replacing the private IP address of the first terminal before NAT by the public IP address of the first terminal after NAT and replacing the public IP address of the second terminal after NAT with the private IP address of the second terminal before NAT and encapsulating the packet into the tunnel between the CGN entity and the second gateway, wherein a source IP address of an outer-layer IP header of the tunnel is an IP address of the CGN entity, and the second softwire-identifier SID of the tunnel is an SID associated with the second terminal.

6. The CGN entity according to claim 4, wherein:
the information about the tunnel between the CGN entity and the first gateway comprises: a start IP address of the tunnel, an end IP address of the tunnel, a first SID softwire identifier, and a tunnel type, where the first SID is associated with the first terminal.

7. The CGN entity according to claim 4, further comprising:
a second establishing unit (33), configured to establish a signaling channel to the second gateway according to a fourth SID, to transmit the private IP address of the first terminal before NAT and public IP address of the first terminal after NAT, the private IP address of the second terminal before NAT and public IP address of the second terminal after NAT, and the information about the tunnel between the CGN entity and the first gateway.

8. The CGN entity according to claim 6, wherein the CGN entity further comprises:
a storing unit (31), configured to store the private IP address of the first terminal before NAT and public IP address of the first terminal after NAT, the private IP address of the second terminal before NAT and public IP address of the second terminal after NAT, and the first SID.

9. The CGN entity according to claim 8, wherein the CGN entity further comprises:
a first deleting unit (34), configured to delete the first SID when the first terminal goes offline; and
a first notifying unit (35), configured to instruct the second gateway to delete the IP addresses of the first terminal before and after NAT.

10. The CGN entity according to claim 4, wherein the CGN entity further comprises:
a third sending unit (38), configured to send the private and public IP addresses and port numbers of the first terminal before and after NAT to the second gateway.

11. A gateway, comprising:
a receiving unit (51), configured to receive a packet sent by a first terminal, wherein a source IP address of the packet is a private IP address of the first terminal before NAT, and a destination IP address of the packet is a public IP address of a second terminal after NAT;
a translating unit (52), configured to, according to private and public IP addresses of the first terminal before and after NAT and private and public IP addresses of the second terminal before and after NAT which are received from a CGN entity, replace the source IP address of the packet with a public IP address of the first terminal after NAT and replace the destination IP address of the packet with a private IP address of the second terminal before NAT; and
a sending unit (53), configured to simulate the CGN entity to send the packet with the replaced addresses to a gateway of the second terminal according to information about a tunnel between the CGN entity and the gateway of the second terminal, wherein the information about the tunnel is received from the CGN entity and a source IP address of an outer-layer IP header of the tunnel is an IP address of the CGN entity.

12. The gateway according to claim 11, further comprising:
a third deleting unit (61), configured to delete the private and public IP addresses of the first terminal before and after NAT when the first terminal goes offline; and
a third notifying unit (62), configured to instruct the gateway of the second terminal to delete the private and public IP addresses of the first terminal before and after NAT.

13. A data transmission system, comprising:
a CGN entity (71), configured to: when determining that data is transmitted between a first terminal of a first gateway (72) and a second terminal of a second gateway (73), send a private IP address of the first terminal before NAT and a public IP address of the first terminal after NAT, a private IP address of the second terminal before NAT and a public IP address of the second terminal after NAT, and information about a tunnel between the CGN entity and the second gateway to the first gateway; and
the first gateway (72), configured to: receive a packet sent by the first terminal, wherein a source IP address of the packet is a private IP address of the first terminal before NAT, and a destination IP address of the packet is a public IP address of the second terminal after NAT; replace the source IP address of the packet with a public IP address of the first terminal after NAT and replace the destination IP address of the packet with a private IP address of the second terminal before NAT; and simulate the CGN entity to send the packet with the replaced addresses to the second gateway (73) according to the information about the tunnel between the CGN entity (71) and the second gateway (73), wherein a source IP address of an outer-layer IP header of the tunnel is an IP address of the CGN entity.

## Patentansprüche

1. Auf "Carrier Grade Network Address Translation"-Entität, CGN-Entität, basierendes Datenübertragungsverfahren, das Folgendes umfasst:
Bestimmen (11), durch eine CGN-Entität, dass Daten zwischen einem ersten Endgerät eines ersten Gateways und einem zweiten Endgerät eines zweiten Gateways übermittelt werden; und
Senden (12), durch die CGN-Entität, einer privaten IP-Adresse des ersten Endgeräts vor Netzwerkadressenübersetzung, NAT, und einer öffentlichen IP-Adresse des ersten Endgeräts nach NAT, einer privaten IP-Adresse des zweiten Endgeräts vor NAT und einer öffentlichen IP-Adresse des zweiten Endgeräts nach NAT und von Informationen über einen Tunnel zwischen der CGN-Entität und dem ersten Gateway zu dem zweiten Gateway, wobei die Informationen über den Tunnel zwischen der CGN-Entität und dem ersten Gateway eine erste "Softwire"-Kennung SID beinhalten, so dass das zweite Gateway die CGN-Entität simuliert, um Daten, die durch das zweite Endgerät gesendet werden, an das erste Gateway weiterzuleiten, indem ein Paket vom zweiten Endgerät empfangen wird, die private IP-Adresse des zweiten Endgeräts vor NAT durch die öffentliche IP-Adresse des zweiten Endgeräts nach NAT ersetzt wird und die öffentliche IP-Adresse des ersten Endgeräts nach NAT mit der privaten IP-Adresse des ersten Endgeräts vor NAT ersetzt wird und das Paket in den Tunnel zwischen der CGN-Entität und dem ersten Gateway eingekapselt wird, wobei eine IP-Quelladresse eines IP-Kopfes einer äußeren Schicht des Tunnels eine IP-Adresse der CGN-Entität ist und die erste "Softwire"-Kennung SID des Tunnels eine SID ist, die mit dem ersten Endgerät assoziiert ist.

2. Auf CGN-Entität basierendes Datenübertragungsverfahren nach Anspruch 1, das ferner Folgendes umfasst:
Senden, durch die CGN-Entität, der privaten IP-Adresse des ersten Endgeräts vor NAT und der öffentlichen IP-Adresse des ersten Endgeräts nach NAT, der privaten IP-Adresse des zweiten Endgeräts vor NAT und der öffentlichen IP-Adresse des zweiten Endgeräts nach NAT, und von Informationen über einen Tunnel zwischen der CGN-Entität und dem zweiten Gateway zu dem ersten Gateway, wobei die Informationen über einen Tunnel zwischen der CGN-Entität und dem zweiten Gateway eine zweite "Softwire"-Kennung SID beinhalten, so dass das erste Gateway die CGN-Entität simuliert, um Daten, die durch das erste Endgerät gesendet werden, an das zweite Gateway weiterzuleiten, indem ein Paket vom ersten Endgerät empfangen wird, die private IP-Adresse des ersten Endgeräts vor NAT durch die öffentliche IP-Adresse des ersten Endgeräts nach NAT ersetzt wird und die öffentliche IP-Adresse des zweiten Endgeräts nach NAT mit der privaten IP-Adresse des zweiten Endgeräts vor NAT ersetzt wird und das Paket in den Tunnel zwischen der CGN-Entität und dem zweiten Gateway eingekapselt wird, wobei eine IP-Quelladresse eines IP-Kopfes einer äußeren Schicht des Tunnels eine IP-Adresse der CGN-Entität ist und die zweite "Softwire"-Kennung SID des Tunnels eine SID ist, die mit dem zweiten Endgerät assoziiert ist.

3. Auf CGN-Entität basierendes Datenübertragungsverfahren nach Anspruch 1, das ferner Folgendes umfasst:
Aufbauen eines Signalisierungskanals zwischen der CGN-Entität und dem zweiten Gateway gemäß einer vierten SID und Übermitteln der privaten IP-Adresse des ersten Endgeräts vor NAT und der öffentlichen IP-Adresse des ersten Endgeräts nach NAT, der privaten IP-Adresse des zweiten Endgeräts vor NAT und der öffentlichen IP-Adresse des zweiten Endgeräts nach NAT und der Informationen über den Tunnel zwischen der CGN-Entität und dem ersten Gateway.

4. CGN-Entität, die Folgendes umfasst:
eine Bestimmungseinheit (21), die dazu konfiguriert ist, zu bestimmen, dass Daten zwischen einem ersten Endgerät eines ersten Gateways und einem zweiten Endgerät eines zweiten Gateways übermittelt werden; und
eine erste Sendeeinheit (22), die dazu konfiguriert ist, eine private IP-Adresse des ersten Endgeräts vor NAT und eine öffentliche IP-Adresse des ersten Endgeräts nach NAT, eine private IP-Adresse des zweiten Endgeräts vor NAT und eine öffentliche IP-Adresse des zweiten Endgeräts nach NAT und Informationen über einen Tunnel zwischen der CGN-Entität und dem ersten Gateway zum zweiten Gateway zu senden, wobei die Informationen über den Tunnel zwischen der CGN-Entität und dem ersten Gateway eine erste "Softwire"-Kennung SID beinhalten, so dass das zweite Gateway die CGN-Entität simulieren kann, um Daten, die durch das zweite Endgerät gesendet werden, an das erste Gateway weiterzuleiten, indem ein Paket vom zweiten Endgerät empfangen wird, die private IP-Adresse des zweiten Endgeräts vor NAT durch die öffentliche IP-Adresse des zweiten Endgeräts nach NAT ersetzt wird und die öffentliche IP-Adresse des ersten Endgeräts nach NAT mit der privaten IP-Adresse des ersten Endgeräts vor NAT ersetzt wird und das Paket in den Tunnel zwischen der CGN-Entität und dem ersten Gateway eingekapselt wird, wobei eine IP-Quelladresse eines IP-Kopfes einer äußeren Schicht des Tunnels eine IP-Adresse der CGN-Entität ist und die erste "Softwire"-Kennung SID des Tunnels eine SID ist, die mit dem ersten Endgerät assoziiert ist.

5. CGN-Entität nach Anspruch 4, die ferner Folgendes umfasst:
eine zweite Sendeeinheit (23), die dazu konfiguriert ist, die private IP-Adresse des ersten Endgeräts vor NAT und die öffentliche IP-Adresse des ersten Endgeräts nach NAT, die private IP-Adresse des zweiten Endgeräts vor NAT und die öffentliche IP-Adresse des zweiten Endgeräts nach NAT und Informationen über einen Tunnel zwischen der CGN-Entität und dem zweiten Gateway zum ersten Gateway zu senden, wobei die Informationen über einen Tunnel zwischen der CGN-Entität und dem zweiten Gateway eine zweite "Softwire"-Kennung SID beinhalten, so dass das erste Gateway die CGN-Entität simulieren kann, um Daten, die durch das erste Endgerät gesendet werden, an das zweite Gateway weiterzuleiten, indem ein Paket vom ersten Endgerät empfangen wird, die private IP-Adresse des ersten Endgeräts vor NAT durch die öffentliche IP-Adresse des ersten Endgeräts nach NAT ersetzt wird und die öffentliche IP-Adresse des zweiten Endgeräts nach NAT mit der privaten IP-Adresse des zweiten Endgeräts vor NAT ersetzt wird und das Paket in den Tunnel zwischen der CGN-Entität und dem zweiten Gateway eingekapselt wird, wobei eine IP-Quelladresse eines IP-Kopfes einer äußeren Schicht des Tunnels eine IP-Adresse der CGN-Entität ist und die zweite "Softwire"-Kennung SID des Tunnels eine SID ist, die mit dem zweiten Endgerät assoziiert ist.

6. CGN-Entität nach Anspruch 4, wobei:
die Informationen über den Tunnel zwischen der CGN-Entität und dem ersten Gateway Folgendes umfassen: eine IP-Startadresse des Tunnels, eine IP-Endadresse des Tunnels, eine erste SID-"Softwire"-Kennung und einen Tunneltyp, wobei die erste SID mit dem ersten Endgerät assoziiert ist.

7. CGN-Entität nach Anspruch 4, die ferner Folgendes umfasst:
eine zweite Aufbaueinheit (33), die dazu konfiguriert ist, einen Signalisierungskanal zu dem zweiten Gateway gemäß einer vierten SID aufzubauen, die private IP-Adresse des ersten Endgeräts vor NAT und die öffentliche IP-Adresse des ersten Endgeräts nach NAT, die private IP-Adresse des zweiten Endgeräts vor NAT und die öffentliche IP-Adresse des zweiten Endgeräts nach NAT und die Informationen über den Tunnel zwischen der CGN-Entität und dem ersten Gateway zu übermitteln.

8. CGN-Entität nach Anspruch 6, wobei die CGN-Entität ferner Folgendes umfasst:
eine Speichereinheit (31), die dazu konfiguriert ist, die private IP-Adresse des ersten Endgeräts vor NAT und die öffentliche IP-Adresse des ersten Endgeräts nach NAT, die private IP-Adresse des zweiten Endgeräts vor NAT und die öffentliche IP-Adresse des zweiten Endgeräts nach NAT und die erste SID zu speichern.

9. CGN-Entität nach Anspruch 8, wobei die CGN-Entität ferner Folgendes umfasst:
eine erste Löscheinheit (34), die dazu konfiguriert ist, die erste SID zu löschen, wenn das erste Endgerät offline geht; und
eine erste Benachrichtigungseinheit (35), die dazu konfiguriert ist, das zweite Gateway anzuweisen, die IP-Adressen des ersten Endgeräts vor und nach NAT zu löschen.

10. CGN-Entität nach Anspruch 4, wobei die CGN-Entität ferner Folgendes umfasst:
eine dritte Sendeeinheit (38), die dazu konfiguriert ist, die privaten und öffentlichen IP-Adressen und die Portnummern des ersten Endgeräts vor und nach NAT zum zweiten Gateway zu senden.

11. Gateway, das Folgendes umfasst:
eine Empfangseinheit (51), die dazu konfiguriert ist, ein Paket, das durch ein erstes Endgerät gesendet wird, zu empfangen, wobei eine IP-Quelladresse des Pakets eine private IP-Adresse des ersten Endgeräts vor NAT ist und eine IP-Zieladresse des Pakets eine öffentliche IP-Adresse eines zweiten Endgeräts nach NAT ist;
eine Übersetzungseinheit (52), die dazu konfiguriert ist, gemäß privater und öffentlicher IP-Adressen des ersten Endgeräts vor und nach NAT und privater und öffentlicher IP-Adressen des zweiten Endgeräts vor und nach NAT, die von einer CGN-Entität empfangen werden, die IP-Quelladresse des Pakets mit einer öffentlichen IP-Adresse des ersten Endgeräts nach NAT zu ersetzen und die IP-Zieladresse des Pakets mit einer privaten IP-Adresse des zweiten Endgeräts vor NAT zu ersetzen; und
eine Sendeeinheit (53), die dazu konfiguriert ist, die CGN-Entität zu simulieren, um das Paket mit den ersetzten Adressen zu einem Gateway des zweiten Endgeräts gemäß Informationen über einen Tunnel zwischen der CGN-Entität und dem Gateway des zweiten Endgeräts zu senden, wobei die Informationen über den Tunnel von der CGN-Entität empfangen werden und eine IP-Quelladresse eines IP-Kopfes einer äußeren Schicht des Tunnels eine IP-Adresse der CGN-Entität ist.

12. Gateway nach Anspruch 11, das ferner Folgendes umfasst:
eine dritte Löscheinheit (61), die dazu konfiguriert ist, die privaten und öffentlichen IP-Adressen des ersten Endgeräts vor und nach NAT zu löschen, wenn das erste Endgerät offline geht; und
eine dritte Benachrichtigungseinheit (62), die dazu konfiguriert ist, das Gateway des zweiten Endgeräts anzuweisen, die privaten und öffentlichen IP-Adressen des ersten Endgeräts vor und nach NAT zu löschen.

13. Datenübertragungssystem, das Folgendes umfasst:
eine CGN-Entität (71), die dazu konfiguriert ist, wenn bestimmt wird, dass Daten zwischen einem ersten Endgerät eines ersten Gateways (72) und einem zweiten Endgerät eines zweiten Gateways (73) übermittelt werden, eine private IP-Adresse des ersten Endgeräts vor NAT und eine öffentliche IP-Adresse des ersten Endgeräts nach NAT, eine private IP-Adresse des zweiten Endgeräts vor NAT und eine öffentliche IP-Adresse des zweiten Endgeräts nach NAT und Informationen über einen Tunnel zwischen der CGN-Entität und dem zweiten Gateway zum ersten Gateway zu senden; und
das erste Gateway (72), das dazu konfiguriert ist, ein Paket, das durch das erste Endgerät gesendet wird, zu empfangen, wobei eine IP-Quelladresse des Pakets eine private IP-Adresse des ersten Endgeräts vor NAT ist und eine IP-Zieladresse des Pakets eine öffentliche IP-Adresse des zweiten Endgeräts nach NAT ist; die IP-Quelladresse des Pakets mit einer öffentlichen IP-Adresse des ersten Endgeräts nach NAT zu ersetzen und die IP-Zieladresse des Pakets mit einer privaten IP-Adresse des zweiten Endgeräts vor NAT zu ersetzen und die CGN-Entität zu simulieren, um das Paket mit den ersetzten Adressen zu dem zweiten Gateway (73) gemäß den Informationen über den Tunnel zwischen der CGN-Entität (71) und dem zweiten Gateway (73) zu senden, wobei eine IP-Quelladresse eines IP-Kopfes einer äußeren Schicht des Tunnels eine IP-Adresse der CGN-Entität ist.

## Revendications

1. Procédé de transmission de données basé sur une entité carrier grade de traduction d'adresses réseau, CGN, comprenant les étapes suivantes :
déterminer (11), par une entité carrier grade de traduction d'adresses CGN, que des données sont transmises entre un premier terminal d'une première passerelle et un deuxième terminal d'une deuxième passerelle ; et
envoyer (12), par l'entité CGN, une adresse IP privée du premier terminal avant une traduction d'adresses réseau, NAT, et une adresse IP publique du premier terminal après NAT, une adresse IP privée du deuxième terminal avant NAT et une adresse IP publique du deuxième terminal après NAT, et des informations concernant un tunnel entre l'entité CGN et la première passerelle à la deuxième passerelle, les informations concernant le tunnel entre l'entité CGN et la première passerelle comportant un premier identifiant logiciel SID, afin que la deuxième passerelle simule l'entité CGN pour transmettre des données, envoyées par le deuxième terminal, à la première passerelle en recevant un paquet à partir du deuxième terminal, en remplaçant l'adresse IP privée du deuxième terminal avant NAT par l'adresse IP publique du deuxième terminal après NAT et en remplaçant l'adresse IP publique du premier terminal après NAT par l'adresse IP privée du premier terminal avant NAT et en encapsulant le paquet dans le tunnel entre l'entité CGN et la première passerelle, une adresse IP source d'un en-tête IP de couche externe du tunnel étant une adresse IP de l'entité CGN, et le premier identifiant logiciel SID du tunnel étant un SID associé au premier terminal.

2. Procédé de transmission de données basé sur une entité CGN selon la revendication 1, comprenant en outre les étapes suivantes :
envoyer, par l'entité CGN, l'adresse IP privée du premier terminal avant NAT et une adresse IP publique du premier terminal après NAT, l'adresse IP privée du deuxième terminal avant NAT et une adresse IP publique du deuxième terminal après NAT, et des informations concernant un tunnel entre l'entité CGN et la deuxième passerelle à la première passerelle, les informations concernant un tunnel entre l'entité CGN et la deuxième passerelle comportant un deuxième identifiant logiciel SID, afin que la première passerelle simule l'entité CGN pour transmettre des données, envoyées par le premier terminal, à la deuxième passerelle en recevant un paquet à partir du premier terminal, en remplaçant l'adresse IP privée du premier terminal avant NAT par l'adresse IP publique du premier terminal après NAT et en remplaçant l'adresse IP publique du deuxième terminal après NAT par l'adresse IP privée du deuxième terminal avant NAT et en encapsulant le paquet dans le tunnel entre l'entité CGN et la deuxième passerelle, une adresse IP source d'un en-tête IP de couche externe du tunnel étant une adresse IP de l'entité CGN, et le deuxième identifiant logiciel SID du tunnel étant un SID associé au deuxième terminal.

3. Procédé de transmission de données basé sur une entité CGN selon la revendication 1, comprenant en outre :
établir un canal de signalisation entre l'entité CGN et la deuxième passerelle selon un quatrième SID et transmettre l'adresse IP privée du premier terminal avant NAT et une adresse IP publique du premier terminal après NAT, l'adresse IP privée du deuxième terminal avant NAT et une adresse IP publique du deuxième terminal après NAT, et les informations concernant le tunnel entre l'entité CGN et la première passerelle.

4. Entité CGN, comprenant :
une unité de détermination (21), configurée pour déterminer que des données sont transmises entre un premier terminal d'une première passerelle et un deuxième terminal d'une deuxième passerelle ; et
une première unité d'envoi (22), configurée pour envoyer une adresse IP privée du premier terminal avant NAT et une adresse IP publique du premier terminal après NAT, une adresse IP privée du deuxième terminal avant NAT et une adresse IP publique du deuxième terminal après NAT, et des informations concernant un tunnel entre l'entité CGN et la première passerelle à la deuxième passerelle, les informations concernant le tunnel entre l'entité CGN et la première passerelle comportant un premier identifiant logiciel SID, afin que la deuxième passerelle puisse simuler l'entité CGN pour transmettre des données, envoyées par le deuxième terminal, à la première passerelle en recevant un paquet à partir du deuxième terminal, en remplaçant l'adresse IP privée du deuxième terminal avant NAT par l'adresse IP publique du deuxième terminal après NAT et en remplaçant l'adresse IP publique du premier terminal après NAT par l'adresse IP privée du premier terminal avant NAT et en encapsulant le paquet dans le tunnel entre l'entité CGN et la première passerelle, une adresse IP source d'un en-tête IP de couche externe du tunnel étant une adresse IP de l'entité CGN, et le premier identifiant logiciel SID du tunnel étant un SID associé au premier terminal.

5. Entité CGN selon la revendication 4, comprenant en outre :
une deuxième unité d'envoi (23), configurée pour envoyer l'adresse IP privée du premier terminal avant NAT et une adresse IP publique du premier terminal après NAT, l'adresse IP privée du deuxième terminal avant NAT et une adresse IP publique du deuxième terminal après NAT, et des informations concernant un tunnel entre l'entité CGN et la deuxième passerelle à la première passerelle, les informations concernant un tunnel entre l'entité CGN et la deuxième passerelle comportant un deuxième identifiant logiciel SID, afin que la première passerelle puisse simuler l'entité CGN pour transmettre des données, envoyées par le premier terminal, à la deuxième passerelle en recevant un paquet à partir du premier terminal, en remplaçant l'adresse IP privée du premier terminal avant NAT par l'adresse IP publique du premier terminal après NAT et en remplaçant l'adresse IP publique du deuxième terminal après NAT par l'adresse IP privée du deuxième terminal avant NAT et en encapsulant le paquet dans le tunnel entre l'entité CGN et la deuxième passerelle, une adresse IP source d'un en-tête IP de couche externe du tunnel étant une adresse IP de l'entité CGN, et le deuxième identifiant logiciel SID du tunnel étant un SID associé au deuxième terminal.

6. Entité CGN selon la revendication 4, dans laquelle :
les informations concernant le tunnel entre l'entité CGN et la première passerelle comprennent : une adresse IP de début du tunnel, et une adresse IP de fin du tunnel, un premier identifiant logiciel SID, et un type de tunnel, le premier SID étant associé au premier terminal.

7. Entité CGN selon la revendication 4, comprenant en outre :
une deuxième unité d'établissement (33), configurée pour établir un canal de signalisation vers la deuxième passerelle selon un quatrième SID, pour transmettre l'adresse IP privée du premier terminal avant NAT et une adresse IP publique du premier terminal après NAT, l'adresse IP privée du deuxième terminal avant NAT et une adresse IP publique du deuxième terminal après NAT, et les informations concernant le tunnel entre l'entité CGN et la première passerelle.

8. Entité CGN selon la revendication 6, dans laquelle l'entité CGN comprend en outre :
une unité de stockage (31), configurée pour stocker l'adresse IP privée du premier terminal avant NAT et une adresse IP publique du premier terminal après NAT, l'adresse IP privée du deuxième terminal avant NAT et une adresse IP publique du deuxième terminal après NAT, et le premier SID.

9. Entité CGN selon la revendication 8, dans laquelle l'entité CGN comprend en outre :
une première unité de suppression (34), configurée pour supprimer le premier SID lorsque le premier terminal se déconnecte ; et
une première unité de notification (35), configurée pour ordonner à la deuxième passerelle de supprimer les adresses IP du premier terminal avant et après NAT.

10. Entité CGN selon la revendication 4, dans laquelle l'entité CGN comprend en outre :
une troisième unité d'envoi (38), configurée pour envoyer les adresses IP privée et publique et les numéros de port du premier terminal avant et après NAT à la deuxième passerelle.

11. Passerelle, comprenant :
une unité de réception (51), configurée pour recevoir un paquet envoyé par un premier terminal, une adresse IP source du paquet étant une adresse IP privée du premier terminal avant NAT, et une adresse IP de destination du paquet étant une adresse IP publique d'un deuxième terminal après NAT ;
une unité de traduction (52), configurée pour remplacer, selon les adresses IP privée et publique du premier terminal avant et après NAT et des adresses IP privée et publique du deuxième terminal avant et après NAT qui sont reçues à partir d'une entité CGN, l'adresse IP source du paquet par une adresse IP publique du premier terminal après NAT et remplacer l'adresse IP de destination du paquet par une adresse IP privée du deuxième terminal avant NAT ; et
une unité d'envoi (53), configurée pour simuler l'entité CGN pour envoyer le paquet avec les adresses remplacées à une passerelle du deuxième terminal selon des informations concernant un tunnel entre l'entité CGN et la passerelle du deuxième terminal, les informations concernant le tunnel étant reçues à partir de l'entité CGN et une adresse IP source d'un en-tête IP de couche externe du tunnel étant une adresse IP de l'entité CGN.

12. Passerelle selon la revendication 11, comprenant en outre :
une troisième unité de suppression (61), configurée pour supprimer les adresses IP privée et publique du premier terminal avant et après NAT lorsque le premier terminal se déconnecte ; et
une troisième unité de notification (62), configurée pour ordonner à la passerelle du deuxième terminal de supprimer les adresses IP privée et publique du premier terminal avant et après NAT.

13. Système de transmission de données, comprenant :
une entité CGN (71), configurée pour : lors de la détermination que des données sont transmises entre un premier terminal d'une première passerelle (72) et un deuxième terminal d'une deuxième passerelle (73), envoyer une adresse IP privée du premier terminal avant NAT et une adresse IP publique du premier terminal après NAT, une adresse IP privée du deuxième terminal avant NAT et une adresse IP publique du deuxième terminal après NAT, et des informations concernant un tunnel entre l'entité CGN et la deuxième passerelle à la première passerelle ; et
la première passerelle (72), configurée pour : recevoir un paquet envoyé par le premier terminal, une adresse IP source du paquet étant une adresse IP privée du premier terminal avant NAT, et une adresse IP de destination du paquet étant une adresse IP publique du deuxième terminal après NAT ; remplacer l'adresse IP source du paquet par une adresse IP publique du premier terminal après NAT et remplacer l'adresse IP de destination du paquet par une adresse IP privée du deuxième terminal avant NAT ; et simuler l'entité CGN pour envoyer le paquet avec les adresses remplacées de la deuxième passerelle (73) selon les informations concernant le tunnel entre l'entité CGN (71) et la deuxième passerelle (73), une adresse IP source d'un en-tête IP de couche externe du tunnel étant une adresse IP de l'entité CGN.
